# EUROPÄISCHE PATENTANMELDUNG

(11) **EP 1 482 295 A1**
(43) Veröffentlichungstag der Anmeldung: **01.12.2004**
(21) Anmeldenummer: 04005382.9
(22) Anmeldetag: 06.03.2004
(51) Int. Cl.: G01M 17/02, G01L 5/16, B60T 8/00

(54) **Verwendung eines miniaturisierten 3-Komponenten-Kraftsensors im Zusammenhang mit Fahrzeugluftreifen und einem Reifenprüfstand**

(30) Priorität: 28.05.2003 DE 10324505
(71) Anmelder: Continental Aktiengesellschaft, 30165 Hannover (DE)
(72) Erfinder: Mohren, Günter, 30456 Hannover (DE); Köhne, Stephan, Dr., 31515 Wunstorf (DE)

(57) **Zusammenfassung**

Die Erfindung betrifft die Verwendung eines aus der Medizintechnik bekannten Sensors für den Bereich der Fahrzeugluftreifen, wobei der Sensor ein Piezosensor aus Silizium ist, welcher einen Druchmesser von etwa 0,7 mm aufweist und mechanische Drück von bis zu 10 Mega-Pascal in entsprechende elektrische Signale umwandelt.

## Beschreibung

Die Erfindung betrifft die Verwendung eines bekannten miniaturisierten 3-Komponenten-Kraftsensors für das Gebiet der Fahrzeugluftreifen, sowie die Verwendung des 3-Komponenten-Kraftsensors in einem Reifenprüfstand, sowie die Verwendung des bekannten 3-Komponenten-Kraftsensors in einem Fahrzeugluftreifen.

Sensoren zum Messen von Kräften spielen im Bereich der Herstellung, von Testverfahren und im realen Fahrgeschehen von Fahrzeugluftreifen eine zunehmende Rolle. So ist es bereits bekannt, in Fahrzeugluftreifen geeignete Sensoren einzubauen, welche Signale aufnehmen und an eine Auswerteeinheit weitergeleitet werden, welche durch Abgleichung von Referenzwerten beispielsweise dem Fahrer eines Kraftfahrzeuges Informationen z. B. über den Reibwert der Straßenoberfläche zur Verfügung stellt oder Einflüsse ohne Mitwirkung des Fahrers auf Komponenten des Fahrzeuges vornimmt. Derartige Sensoren werden u.a. im Bereich der ABS- und ESP-Regelung verwendet.

Im Bereich der Prüfung von Fahrzeugluftreifen unter Laborbedingungen werden verschiedenste Prüfeinrichtungen und Sensoren verwendet, um bestimmte Aspekte des Reifens zu erfassen, um daraus Aussagen gewinnen zu können.

Bestimmte Parameter lassen sich hierbei jedoch nur ungenügend erfassen und messen. Insbesondere die 3-Komponenten-Kraftmessung bereitet Schwierigkeiten bei Reifenprüfständen, wie sie beispielsweise aus der DE 195 15 949 C2 und der EP 0 579 054 A2 bekannt sind. Üblicherweise werden bei derartigen Reifenprüfständen nämlich optische Sensoren in Form von Kameras verwendet, welche optische Signale liefern, aus denen Kraftzustände hergeleitet werden. Ferner ist es aus dem Bereich der Reifenprüfung bekannt, drucksensitive Folien einzusetzen, welche beispielsweise unter der Handelsbezeichnung "Pressurex®" der japanischen Firma Fuji lieferbar sind. Rollt ein Fahrzeugluftreifen auf einer derartigen drucksensitiven Folie ab, entstehen direkt auf der Folie Bilder des so genannten "Footprints", also des Profilabdruckes auf der Folie, wobei diese Bilder je nach Druckintensität unterschiedliche Farben annehmen, so dass über die Farbzonen Aussagen zu den Kräften gewonnen werden können, wobei die Genauigkeit der erzielbaren Aussagen zu wünschen übrig lässt. Zudem erlauben derartige Folien nur statische Messungen von Reifenprofilen, die Messung beispielsweise von vertikalen dynamischen Kraftverteilungen ist daher mit derartigen Folien nicht durchführbar. Tangential wirkende Kräfte können mit derartigen Folien überhaupt nicht erfaßt werden; die tangentialen Komponenten können bislang überhaupt nur mit sehr aufwändigen Messaparaturen erfaßt werden.

In Reifen verwendete Sensoren weisen ebenfalls eine Reihe von Nachteilen auf. Ein besonderer Nachteil ist, dass sie sich nur schwer in den Reifen einvulkanisieren lassen, da sie sich entweder schlecht mit dem sie umgebenden Gummimaterial verbinden lassen oder dass ihr Gehäuse oder ähnliche Bestandteile des Sensors empfindlich auf bei der Vulkanisation entstehende Wärme reagieren. Ferner ist die Baugröße bislang üblicher Sensoren in vielerlei Hinsicht nachteilig.

Der Erfinder hat es sich zur Aufgabe gemacht, einen Sensor aufzufinden, der sich im Zusammenhang mit Fahrzeugluftreifen verwenden lässt. Insbesondere soll ein Sensor genutzt werden, der im Zusammenhang mit der Prüfung und Messung von Fahrzeugluftreifen im Laborbetrieb geeeignet ist. Ferner soll ein Sensor gefunden werden, der sich im Fahrzeugluftreifen selbst verwenden lässt.

Die Aufgabe wird gelöst durch die Verwendung eines Sensors gemäß dem Patentanspruch 1.

Der Erfinder hat einen geeigneten Sensor auf einem ihm völlig fern liegenden Gebiet gefunden, nämlich der Medizintechnik. Aus diesem Bereich ist ein Mikrosensor bekannt, der vom Institut für Mikrotechnik Mainz GmbH (IMM) in Zusammenarbeit mit dem Scuola Superiore Sant' Anna MiTech Lab, Pisa (Italien), entwickelt wurde. Eine Veröffentlichung zu diesem Sensor ist im Internet unter der Adresse http://imm.mediadialog24.de/v0/vvseitend/vvpresse/presse_detail.php?id=59 hinterlegt.

Bei diesem Sensor handelt es sich um einen Piezosensor aus Silizium, welcher mechanische Drücke von bis zu 10 Mega-Pascal in entsprechende elektrische Signale umwandelt. Dieser Sensor macht senkrecht auf die Oberfläche des Sensors wirkende Kräfte und Scherkräfte unterscheidbar, wobei der geringe Durchmesser des Sensors von 0,7 mm eine Druckmessung mit sehr hoher örtlicher Auflösung ermöglicht. Hergestellt wird dieser mikrostrukturierte Sensor mittels eines so genannten Advanced Silicon Etching (ASETM)-Verfahrens. Mit diesem Verfahren lässt sich Silizium unabhängig von der Orientierung der Kristalle präzise bearbeiten, wobei Mikrostrukturen gefertigt werden können, mit Kanälen von etwa 15 Mikrometer Breite und bis zu mehreren 100 Mikrometern Tiefe. Derartige Sensoren wurden bislang in der Medizintechnik in Bein- und Armprothesen eingesetzt.

Der Erfinder hat erkannt, dass mit derartigen Sensoren dynamische Querkraft- und Vertikalkraftmessungen in X-, Y- und Z-Richtung durchführen lassen, Messungen also, die bislang in Reifenprüfständen jeweils separat und nicht gleichzeitig durchführbar waren bzw. einen wirtschaftlich kaum tragbaren Aufwand nötig machten. Wird der aus der Medizintechnik bekannte Sensor nunmehr beispielsweise in der Prüffläche eines Flachbahn-, Flachband- oder Trommelprüfstandes eingesetzt, können Messungen an Fahrzeugluftreifen einfach und schnell durchgeführt werden, wobei sich durch die Sensoren Messwerte gewinnen lassen, die hinsichtlich ihrer Auflösung und Präzision alles übertreffen, was bislang auf diesem Sektor bekannt war. Ein derartiger Sensor eignet sich also hervorragend zur sogenannten 3K-Kraftmessung, worunter man eine Kraftmessung in drei Richtungen versteht.

Gemäß Weiterbildungen der Erfindung ist es vorgesehen, eine Vielzahl von den genannten Sensoren zu einem sogenannten Array, d.h. zu einem Messfeld, anzuordnen, und zwar sowohl in Reifenprüfständen als auch in Fahrzeugreifen selbst. Ein derartiges Array ist insbesondere zur Messung auftretender Kräfte unterschiedlicher Profilblöcke eines Reifens hilfreich.

Die Zusammenstellung einer Merhzahl der bekannten Sensoren zu einem Array ist aus dem ursprünglichen Einsatzgebiet der Medizintechnik noch nicht bekannt worden.

In einer praktischen Ausgestaltung wird ein Sensor oder ein Array von Sensoren in einer Schlittenoberfläche eines Flachbahn-Prüfstandes eingefasst. Ein mit den Sensoren verbundenes Computersystem führt die Auswertung der beim Abrollen des Fahrzeugluftreifens aufgenommenen Daten durch, wobei die Prüfstandssteuerung die Einstellung von Last-, Moment-, Sturz-, Schräglaufwinkel- und Geschwindigkeit übernimmt. Diese Größen werden durch eine weitere Sensorik erfasst und geregelt.

Vorteilhaft an der Verwendung des bekannten Sensors ist auch, dass dieser nicht nur zur Erfassung von dynamischen Kräften geeignet ist, sondern auch zur Erfassung von statischen Kräften.

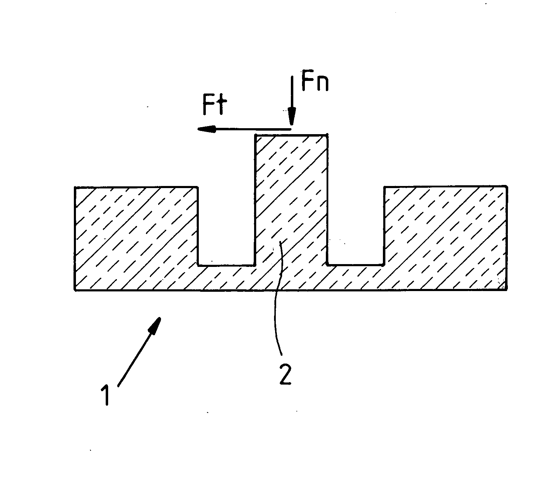

Weitere Vorteile und Ausgestaltungen werden in der Zeichnung anhand eines Ausführungsbeispiels und in den Patentansprüchen beschrieben.

In der einzigen Figur der Zeichnung ist ein 3-Komponenten-Kraftsensor 1 im Querschnitt dargestellt. Einstückig am Sensor 1 angeformt ist ein überstehender Meßkopf 2, auf den Kräfte einwirken, was mit den Pfeilen angedeutet ist. Beim Einwirken von Kräften wird ein elektrisches Signal über nicht dargestellte elektrische Leiter einer Datenauswerteeinheit zugeleitet, welche die elektrischen Signale auswertet.

## Patentansprüche

1. Verwendung eines bekannten miniaturisierten 3-Komponenten-Kraftsensors im Zusammenhang mit Fahrzeugluftreifen, wobei der Sensor ein Piezosensor aus Silizium zur Erfassung und Umwandlung von Kräften, nämlich von Längs-, Quer- und Vertikalkräften ist, wobei der Sensor einen Durchmesser von etwa 0,7 mm aufweist und mechanische Drücke von bis zu 10 Mega-Pascal in entsprechende elektrische Signale umwandelt, und wobei der Sensor in Kontakt mit Gummimaterial eines Fahrzeugluftreifens bringbar ist.

2. Verwendung eines Sensors nach Anspruch 1 **dadurch gekennzeichnet, dass** der Sensor in eine Kontaktfläche eines Reifenprüfstandes eingebracht ist.

3. Verwendung eines bekannten Sensors nach Anspruch 2, **dadurch gekennzeichnet, dass** der Reifenprüfstand ein Flachbahn-Prüfstand ist.

4. Verwendung eines bekannten Sensors nach Anspruch 2, **dadurch gekennzeichnet, dass** der Reifenprüfstand ein Flachband-Prüfstand ist.

5. Verwendung eines Sensors nach Anspruch 2, **dadurch gekennzeichnet, dass** der Reifenprüfstand ein Trommelprüfstand ist.

6. Verwendung eines Sensors nach wenigstens einem der Ansprüche 2 bis 4, **dadurch gekennzeichnet, dass** eine Mehrzahl von Sensoren zu einem Array zusammengefasst sind, wobei dieses Array in den Reifenprüfstand eingebaut ist.

7. Verwendung eines bekannten Sensors nach Anspruch 6, **dadurch gekennzeichnet, dass** die Datenerfassung durch Multiplex-Ansteuerung der einzelnen Sensoren des Arrays erfolgt.

8. Verwendung eines bekannten Sensors nach Anspruch 6, **dadurch gekennzeichnet, dass** ein Sensor des Arrays, welcher sich nicht in Kontakt mit dem Reifen befindet, der Temperaturkompensation dient.

9. Verwendung eines bekannten Sensors nach Anspruch 1, **dadurch gekennzeichnet, dass** der Sensor in das Gummimaterial eines Fahrzeugluftreifens eingebettet ist.

10. Verwendung eines bekannten Sensors nach Anspruch 9, **dadurch gekennzeichnet, dass** der Sensor einen überstehenden Sensorkopf aufweist, durch welchen auch geringste Verformungen des Reifenprofils in Längs- und Querrichtung erfaßbar sind.

11. Verwendung eines Sensors nach Anspruch 9 oder 10, **dadurch gekennzeichnet, dass** der Sensor in einem Profilblock eines Fahrzeugluftreifens angeordnet ist.

12. Verwendung eines Sensors nach Anspruch 9 oder 10, **dadurch gekennzeichnet, dass** der Sensor in der Seitenwand des Fahrzeugluftreifens angeordnet ist.

13. Verwendung eines bekannten Sensors nach wenigstens einem der Ansprüche 9 bis 12, **dadurch gekennzeichnet, dass** der Sensor in den fertig ausvulkanisierten Reifen durch eine Bohrung eingebracht ist, wobei die Bohrung durch einen Gummipropfen und durch Kaltvulkanisation verschlossen ist.

14. Verwendung eines bekannten Sensors nach wenigstens einem der Ansprüche 9 bis 13, **dadurch gekennzeichnet, dass** der Sensor in einer Gummischicht eingebettet ist, welche weicher als das umgebende Gummimaterial des Laufstreifens ist.

15. Verwendung eines bekannten Sensors nach wenigstens einem der Ansprüche 9 bis 14, **dadurch gekennzeichnet, dass** die Datenübertragung vom Sensor zu einer Datenauswerteeinheit induktiv erfolgt.

16. Verwendung eines bekannten Sensors nach wenigstens einem der Ansprüche 9 bis 15, **dadurch gekennzeichnet, dass** die Datenübertragung vom Sensor zu einer Datenauswerteeinheit mittels eines Oberflächensignals erfolgt.
